(19) Europäisches Patentamt
European Patent Office
Office européen des brevets

(11) EP 1 174 395 A2

(12) **EUROPEAN PATENT APPLICATION**

(43) Date of publication:
**23.01.2002 Bulletin 2002/04**

(51) Int Cl.[7]: **C02F 1/48**

(21) Application number: **00113526.8**

(22) Date of filing: **26.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **29.06.1999 IT MI991430**

(71) Applicant: **Rossi, Francesco**
**47900 Rimini (IT)**

(72) Inventor: **Rossi, Francesco**
**47900 Rimini (IT)**

(74) Representative: **Cicogna, Franco**
**Ufficio Internazionale Brevetti Dott.Prof. Franco Cicogna Via Visconti di Modrone, 14/A**
**20122 Milano (IT)**

(54) **Electronic apparatus for preventing calcium-carbonate scales in hydraulic systems**

(57) The present invention relates to an electronic apparatus for preventing calcium carbonate or limestone scales in hydraulic systems in general, the main feature of which is that it comprises an electronic central unit with a mains voltage transformer for transforming the mains voltage to a low voltage for power supplying transducers provided for generating negative sign magnetic flux patterns, by a rod element arranged in a vessel therethrough a water flow is caused to pass.

EP 1 174 395 A2

## Description

### BACKGROUND OF THE INVENTION

The present invention relates to an electronic apparatus for preventing calcium carbonate or limestone scales in hydraulic systems in general.

As is known, a very important problem related to hydraulic systems in general is that of reducing and/or eliminating the limestone or calcium carbonate scales inevitably depositing on walls of components of the hydraulic systems.

In particular, scale deposits on pipe walls and on resistance elements cause, in the time, very high load losses and, accordingly, are such as to obstruct the useful pipe passage surface.

Moreover, the scales depositing on walls and electric resistances, because of the very high electrically insulation properties of the limestone, cause a large thermal power waste, thereby reducing the efficiency of the overall system.

Prior solutions for removing or reducing the above mentioned scale deposits provide to use additional chemical substances to modify the physical properties of the starting water.

### SUMMARY OF THE INVENTION

Thus, the aim of the present invention is to overcome the above mentioned problem, by providing such an electronic apparatus which does not require any addition of chemical substances to the water, which does not cause any ion exchanges, such as a formation of sodium salts in replacement of the calcium salts and which, moreover, does not cause any alterations of the chemical and organoleptic properties as well as of the physical features of water conveyed through pipes and the like.

Within the scope of the above mentioned aim, a main object of the present invention is to provide such an electronic apparatus which is adapted to affect water by a physical process to cause calcium to be held suspended in water, without depositing in the form of calcium scales on walls and the like.

A further object of the present invention is to provide such an electronic apparatus which can be easily calibrated depending on contingent requirements, to be efficiently used in hotels, farms, industries in general, as well as in any other desired systems.

A further object of the present invention is to provide such an electronic apparatus which, owing to its peculiar constructional features, is very reliable and safe in operation.

Yet another object of the present invention is to provide such an electronic apparatus which can be easily made starting from easily available elements and materials and which, moreover, is very competitive from a mere economic standpoint.

Yet another object of the present invention is to provide such an electronic apparatus which is specifically designed to include therein either one or more silver rods, to purify and hygienize water conveyed therethrough.

According to one aspect of the present invention, the above mentioned aim and objects, as well as yet other objects, which will become more apparent hereinafter, are achieved by an electronic apparatus for preventing calcium carbonate or limestone scales in hydraulic systems in general, characterized in that said apparatus comprises an electronic central unit including a mains voltage transformer for transforming a mains voltage to a low voltage for power supplying a plurality of transducers adapted to provide negative sign magnetic flux patterns, by a rod arranged in a vessel therethrough a water flow is cause to pass.

### BRIEF DESCRIPTION OF THE DRAWINGS

Further characteristics and advantages of the present invention will become more apparent hereinafter from the following detailed disclosure of a preferred, though not exclusive, embodiment of an electric apparatus for preventing calcium carbonate or limestone scales in hydraulic systems in general, and being illustrated, by way of an indicative, but not limitative, example in the accompanying drawings, where:

Figure 1 is an exploded perspective view illustrating a vessel component of the electronic apparatus according to the present invention;
Figure 2 is a further perspective view illustrating said vessel component;
Figure 3 is an axial cross-sectional view illustrating said vessel component;
Figure 4 illustrates, on an enlarged scale, the detail of the transducer connection;
Figure 5 illustrates an electronic apparatus including a single vessel;
Figure 6 illustrates and electronic apparatus including a plurality of vessels;

Figure 7 is a block diagram illustrating the electronic apparatus specifically designed for preventing limestone scales inside a pipe construction; and

Figure 8 illustrates the vessel shown in Figure 1, in an embodiment thereof including a plurality of silver plate-like rods for purifying water conveyed through said vessels.

## DESCRIPTION OF THE PREFERRED EMBODIMENTS

With reference to the number references of the above mentioned figures, the apparatus for preventing calcium carbonate or limestone scales in hydraulic systems in general, according to the present invention, comprises an electronic central unit, in which a mains voltage transformer, for transforming a conventional 200 V mains voltage to a low voltage for power supplying a plurality of transducers adapted to generate negative sign magnetic flux patterns, is provided.

Said transducers are coupled, by electrically insulating connectors 1, to a rod element 2, arranged inside a vessel generally indicated by the reference number 3, and comprising a cylindric mantle 4 which, at its axial end portions, is closed by bottom elements 5, coupled by peripheral tie-rods 6.

Said mantle 4, bottom elements and peripheral tie-rods are made of a stainless steel material.

The insulating inlets 1, in particular, are connected on said bottom elements 5, where hydraulic connectors or fittings 10 therethrough water to be processed is caused to pass, are provided.

In practical operation, as said water passes inside said mantle 4, it is affected by a negative sign magnetic flux pattern.

Accordingly, said water is charged by negative sign charges, thereby preventing any limestone and/or calcium carbonate material from depositing on walls of the processed apparatus and pipes, which, as known, have conventionally a negative sign, such as tanks and household electric appliances.

Thus, owing to the like-sign electric charges, the limestone particles are held in suspension, and are ejected together with the processed water, without depositing as scales on walls and the like.

In this connection it should be pointed out that the electronic circuit shown in Figure 7 comprises a high voltage power supply 11, which power supplies a circuit leading to a power amplifier 12, upstream of which a low voltage power supply 17 is provided.

Said low-voltage power supply 17, in particular, power supplies-two oscillators 15 and 16, the first of said oscillators being coupled to a power amplifier 12 in turn coupled to a relay 13.

The second oscillator 16, in turn, is coupled to a relay connected to a transducer arranged in the cylinder or vessel, schematically indicated by the reference number 14.

As natural water, of any origin, is heated to a set temperature, the decomposition of calcium and magnesium bicarbonates would cause water insoluble carbonates to form, which will precipitate in a micro-crystalline form, and deposit on the walls of the vessel therein said water is heated.

Thus, a so called"limestone deposit" is formed, encrusting or fouling the water pipes, boiler, kettles and the like, thereby obstructing the heat exchange with a consequent decrease of the water heating thermal apparatus.

As is known, the chemical reaction forming said limestone deposit or scales is the following:

$$Ca(HCO_3)_2 \longrightarrow CO_2 + H_2O + CaCO_3$$

| calcium bicarbonate | carbon dioxide | water | calcium carbonate |
|---|---|---|---|

The scales are mainly constituted by calcium carbonate, since calcium usually represents the main metal component of natural waters.

A crystallographic study, carried out by X-ray difractometric methods, as well as a morphologic study carried out by an electronic scanning microscopic method, have shown that the main portion of crystals formed from a boiling natural water comprise aragonite crystals, i.e. very thin needle-like crystals, or beam or finger crystals constituting fibrous aggregates, which are firmly interleaved with one another.

The above mentioned particular construction allows to "build-in" on walls of any shapes of vessels, solid structures which are very compact and strongly adhering, said solid structures being mainly constituted by limestone or calcium carbonate material.

Actually, only a chemical attack by acids (which would not be possible on metal structures of conventional

systems) would allow to eliminate said scales.

A micrographic study, moreover, shows that, together the mentioned aragonite crystals (of a rhombic system), a small amount of crystalized calcite (trigonal system), being crystalized according to a main rhombohedral structure, is also present.

The latter structure, in particular, as it penetrates between the aragonite needle crystals, weakens its texture.

The above mentioned crystal pattern, on the other hand, could be easily demonstrated by its RX spectrum (with a power dispersion).

By generating a greater number of rhombohedral calcite crystals, on the other hand, the deposited material would detach from the walls, because of a lackness of mechanical strength and compactness and, entrained by the water flow, would exit in earth and powder form without contaminating the water heating system.

The Applicant has found that, upon processing water by a low variable electric field, using the inventive electronic apparatus, water generates, upon boiling, a comparatively high amount of rhombohedral calcite crystals, weakening the fibrous texture of the aragonite material, thereby reducing its compactedness and allowing the limestone or calcium carbonate to be easily detached.

In addition to the above mentioned micrographs, visually demonstrating the above disclosed phenomenon, a RX difractometric method, carried out in a powder process, would show that, after the treatment, the calcite amount would be greater than the aragonite amount.

Actually, the height ratio of some characteristic diffraction peaks of the calcite/aragonite material shows that water, as processed by the electronic apparatus according to the present invention, generates a greater amount of calcite crystals.

This ratio is of 4-6 time greater after the treatment, thereby demonstrating the visual electronic microscope observations and further demonstrating the mechanical weakening of the limestone deposit being formed.

The reasons inducing such a changing of the crystal texture - (considering that aragonite and calcite are chemically identical) - are at present not fully clear: however, it would be possible to submit scientifically acceptable hypotheses, which would constitute very interesting study subject matters (a most important of which would be related to a formation of calcite crystal seeds or germs, due to the above disclosed electric treatment).

On the other hand, from a chemical and physical standpoint, no variation of water would be involved.

Anyhow, the result is that the electrically processed water prevents any scales from forming and this without altering its main features or properties: in particular, the water does not become "aggressive", the acid-base ratio is held unchanged (i.e. its pH does not change), and the dissolved and half-combined carbon dioxide amount does not increase.

Moreover, a further secondary phenomenon, which would be very useful for removing the mentioned scales, must be pointed out: in other words, the small current passing through the subject electric apparatus, of impulsive nature and with a polarity reversal, causes a very low electrolytic phenomenon generating a gas film on the apparatus walls and, in a less degree, through the overall involved system.

By operating the apparatus in a condition removed from the system, it is possible to observe the formation on the electrodes of very small gas bubbles, due to the following reactions which alternately occur at the cathode and anode sides.

At the cathode side:

$$Ca^{++} + 2e \rightarrow Ca$$

calcium ion + 2 electrons → metal calcium

$$Ca + 2H_2O \rightarrow Ca\ (OH)_2 + H_2$$

metal calcium + water → Ca hydroxide + hydrogen gas at the anode side:

$$2HCO_3 - 2e \rightarrow H_2O + 2CO_2 + ½\ O_2$$

bicarbon ions 2 electr. → water + car.diox.gas + oxygen gas

$$2CO_2 + 2H_2O \rightarrow 2H_2CO_3$$

water dissolved carbon dioxide + water → carbonic acid (at least in part)

$$2H_2CO_3 + Ca\,(OH)_2 \rightarrow Ca\,(HCO_3)_2 + 2H_2O$$

carbonic acid + Ca hydroxide → Ca bicarbonate + water

It is believed that the above mentioned gas, hydrogen and mainly oxygen film would actually aid the formed deposit detachment.

The above mentioned gas amounts form with currents of 10-50 milliamperes, which are very low and do not substantially affect water, while sufficient to cause the deposited scales to easily detach from pipes and the like.

In this connection it should be moreover pointed out that the inventive apparatus 20 has a modular construction, since it can comprise either one or more vessels, each of which can be used for processing water in discrete rooms of a multiple-apartments house.

Each vessel 3 can include either one or more silver rods 30, preferably of plate-like configuration, adapted to improve the water characteristics, while purifying it.

From the above disclosure it should be apparent that the invention fully achieves the intended aim and objects.

In particular, the fact is to be pointed out that an apparatus has been provided which can be constructed with a lot of different sizes, depending on requirements, while allowing to perform a water processing which does not modify the physical and chemical properties of the processed water.

The invention, as disclosed, is susceptible to several modifications and variations, all of which will come within the scope of the invention.

In practicing the invention, all of the constructional details can be replaced by other technically equivalent elements.

Moreover, the used materials, as well as the contingent size and shapes, can be any, according to requirements.

## Claims

1. An electronic apparatus for preventing calcium carbonate or limestone scales in hydraulic systems in general, characterized in that said apparatus comprises an electronic central unit including a mains voltage transformer for transforming a mains voltage to a low voltage for power supplying a plurality of transducers adapted to provide negative sign magnetic flux patterns, by a rod arranged in a metal vessel therethrough a water flow is cause to pass

2. An electronic apparatus, according to Clam 1, characterized in that said low voltage is a 12 V voltage.

3. An electronic apparatus, according to Clams 1 and 2, characterized in that said vessel is provided with a cylindric mantle axially closed by bottom elements connected by tie-rods, said rod element axially passing through said cylindric mantle.

4. An electronic apparatus, according to one or more of the preceding claims, characterized in that said rod element is supported by said bottom elements through electrically insulating material inlets.

**5.** An electronic apparatus, according to one or more of the preceding claims, characterized in that said apparatus comprises, on said bottom elements, connections or fittings for allowing water being processed to pass therethrough.

**6.** An electronic apparatus, according to one or more of the preceding claims, characterized in that said mantle, bottom elements and peripheral tie-rods are made of a stainless steel material.

**7.** An electronic apparatus, according to one or more of the preceding claims, characterized in that said apparatus has a modular construction, adapted to hold herein either one or more vessels, each of which can be used for processing water in a discrete room assembly of a multiple-apartment house.

**8.** An electronic apparatus, according to one or more of the preceding claims, characterized in that said apparatus comprises an electronic circuit including a high voltage power supply, which power supplies a circuit leading to a power amplifier, upstream of which a low-voltage power supply is provided.

**9.** An electronic apparatus, according to one or more of the preceding claims, characterized in that said low-voltage power supply power supplies two oscillators, a first of which is coupled to a power amplifier, in turn coupled to a relay.

**10.** An electronic apparatus, according to one or more of the preceding claims, characterized in that the second of said oscillators is coupled to a further relay which is in turn coupled to a transducer arranged in said metal vessel.

**11.** An electronic apparatus for preventing calcium carbonate or limestone scales in hydraulic systems in general, according to the preceding claims, characterized in that said apparatus comprises at least a silver-plate like rod element adapted to purify water.

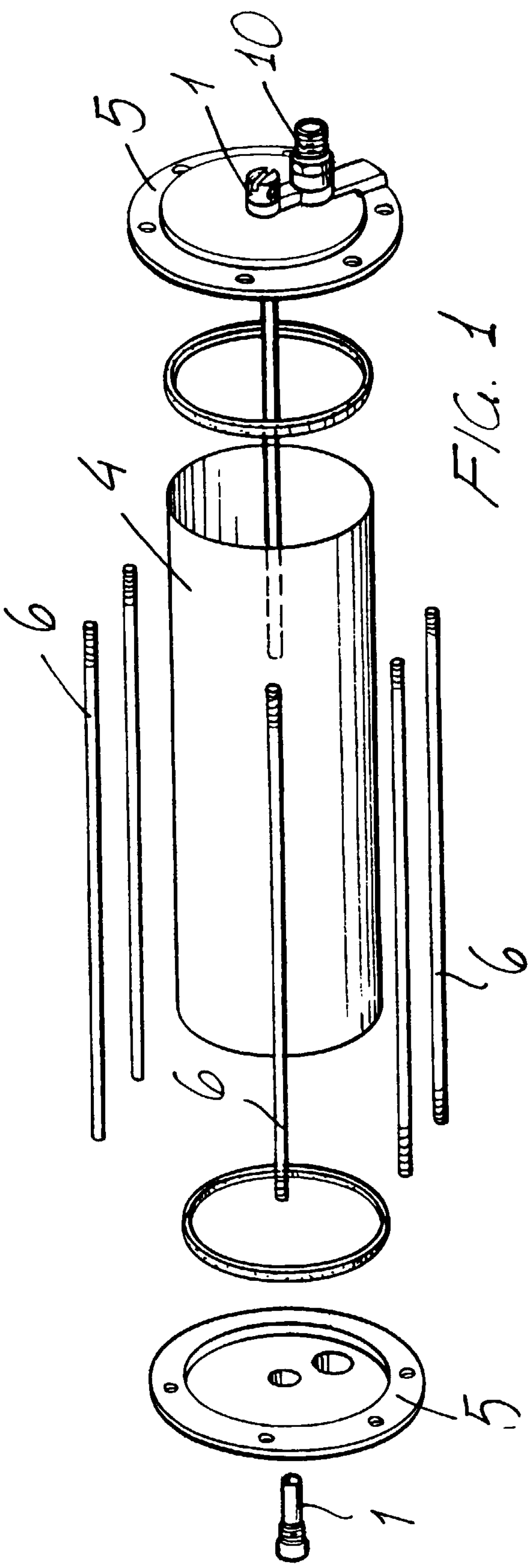


FIG. 1

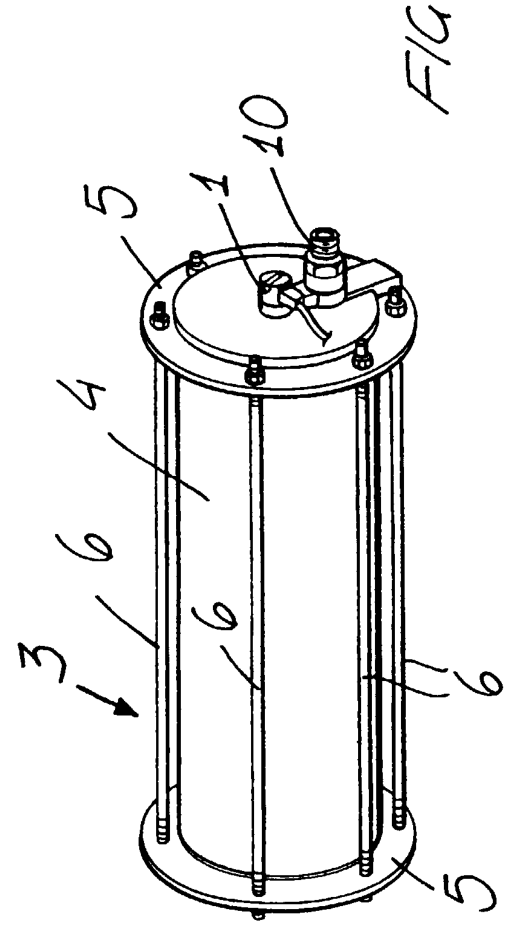


FIG. 2

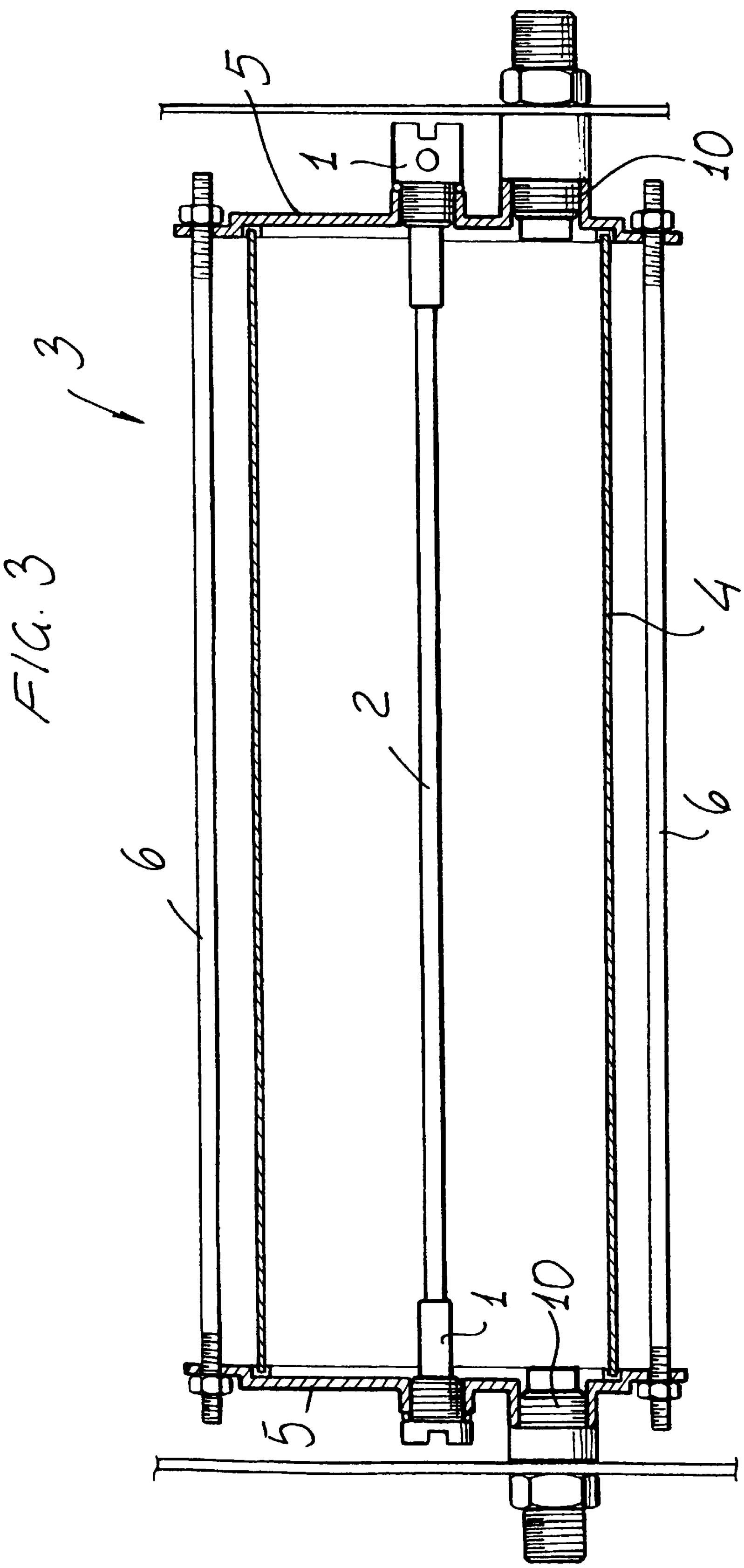


FIG. 3

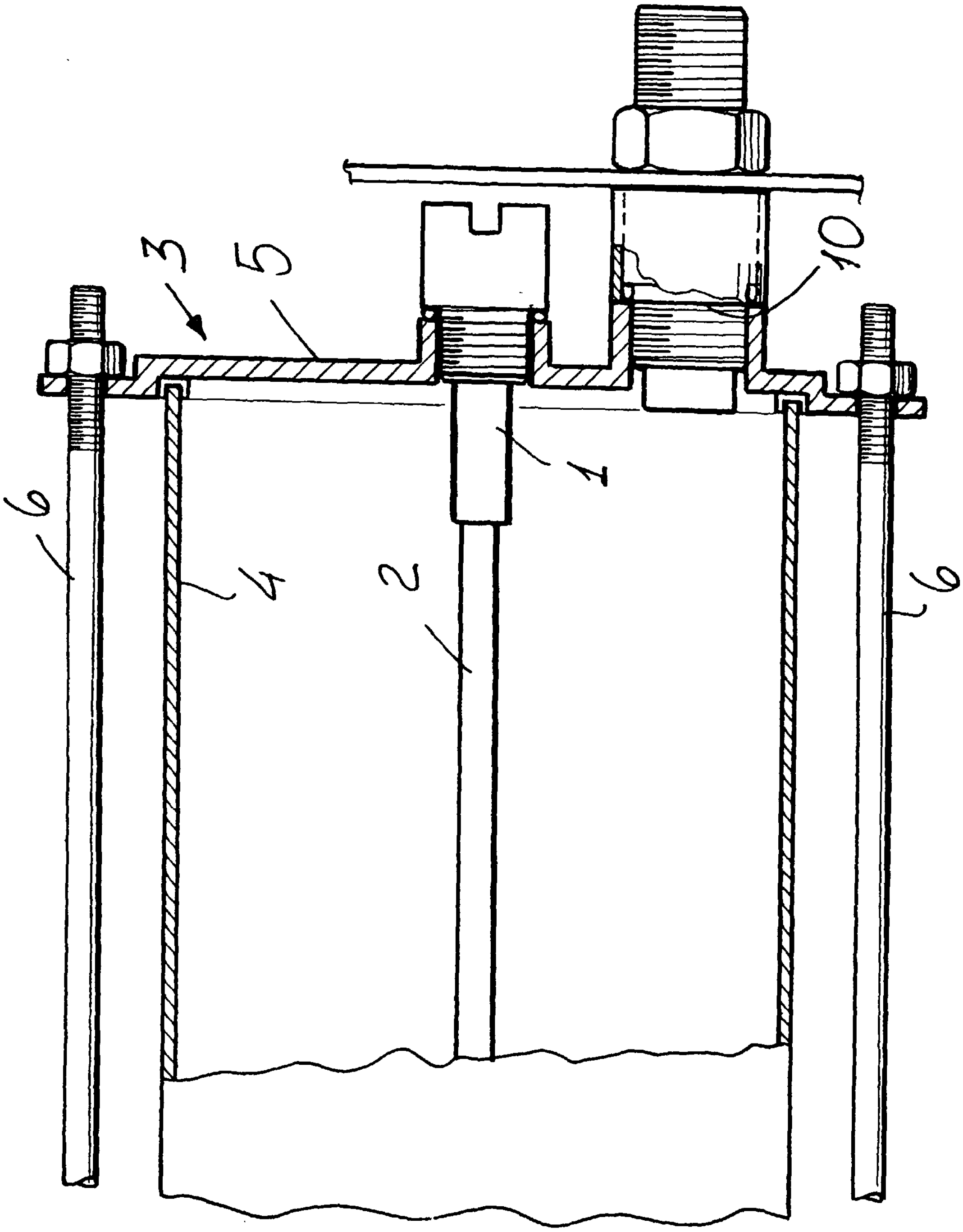


FIG. 4

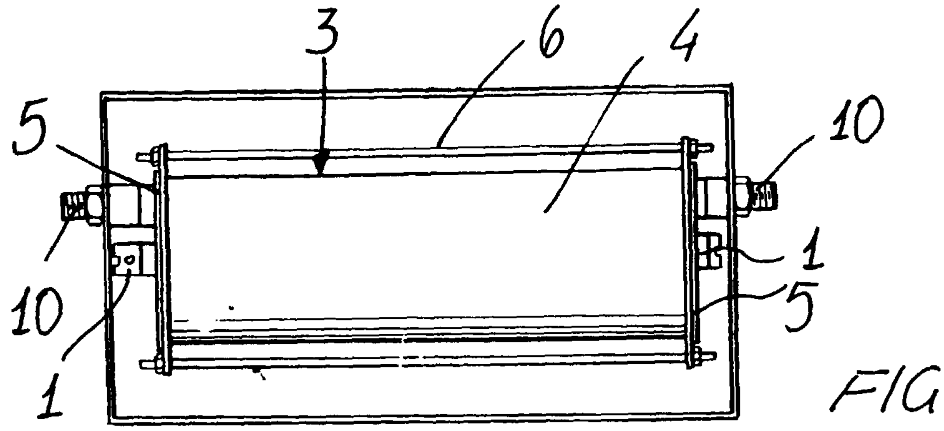
3
6
4
5
10
10
1
1
5
10
1

FIG. 5

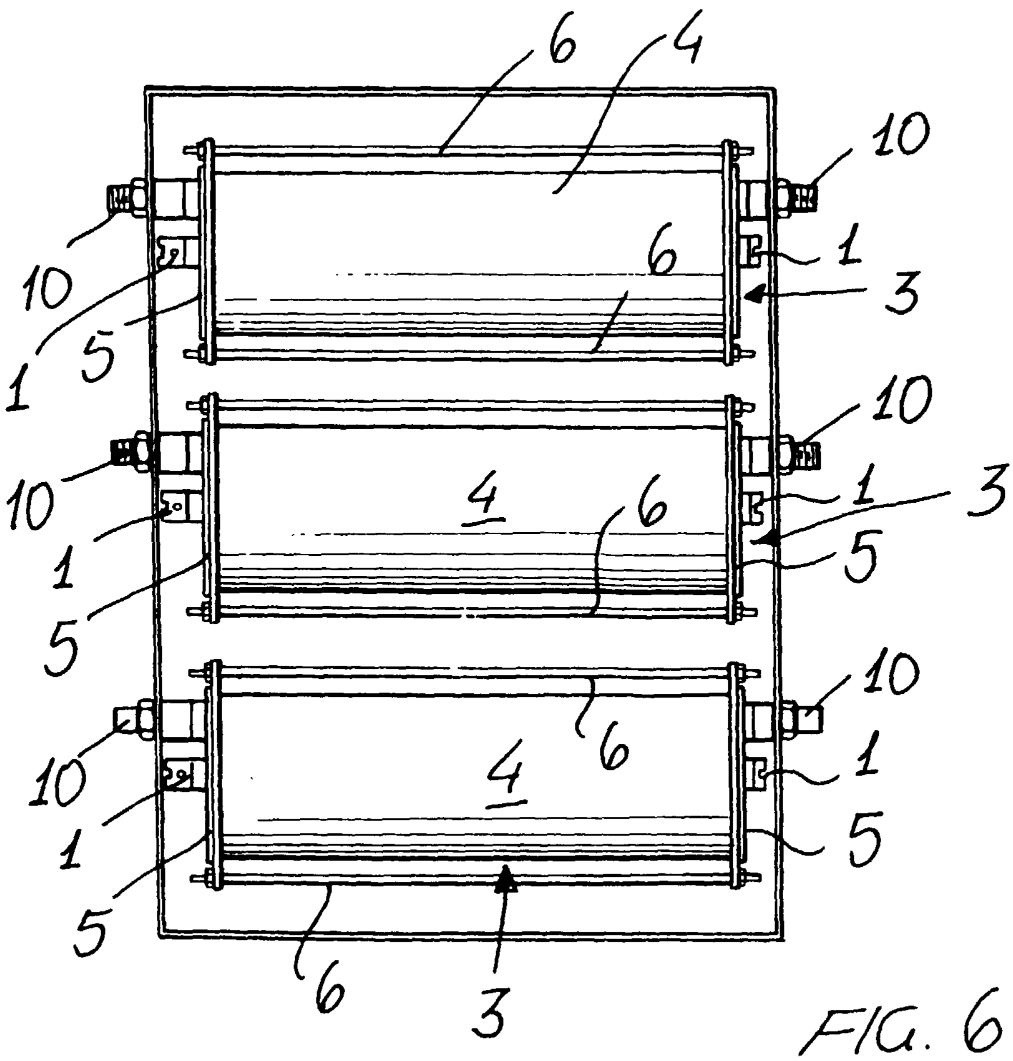
6
4
10
10
6
1
3
10
5
1
10
3
4
6
10
1
5
1
5
10
6
10
4
1
1
10
5
5
6
3

FIG. 6

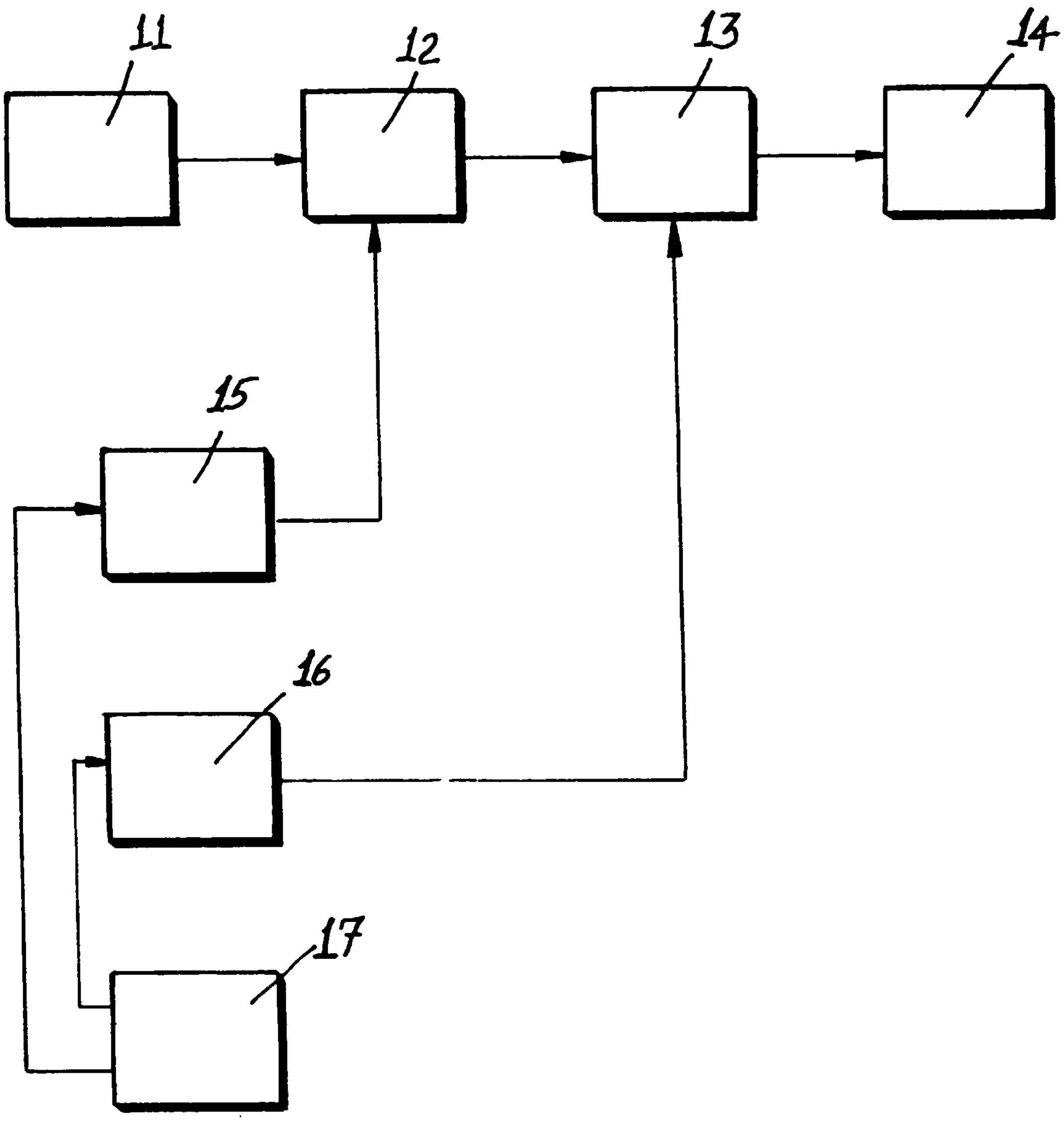


FIG. 7

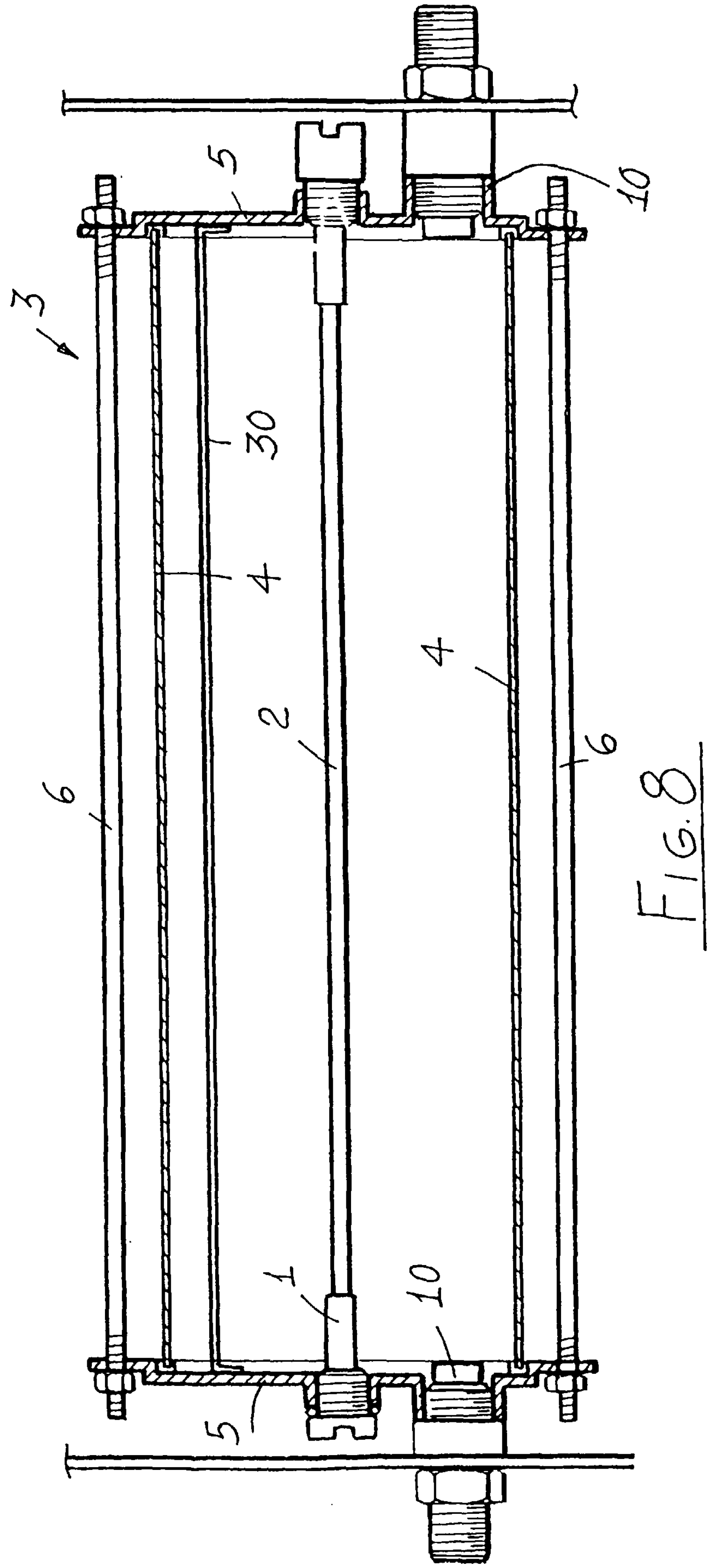


FIG. 8